# EUROPEAN PATENT APPLICATION

(11) **EP 4 213 108 A1**
(43) Date of publication of application: **19.07.2023**
(21) Application number: 22151815.2
(22) Date of filing: 17.01.2022
(51) Int. Cl.: G06V 10/82, G06V 20/69, G06V 10/145, G06V 10/774

(54) **METHOD, DEVICE AND SYSTEM FOR ANALYZING A SAMPLE**

(71) Applicant: CellaVision AB, 223 62 Lund (SE)
(72) Inventor: ALMERS, Martin, 226 51 LUND (SE); HEDLUND, Sven, 247 72 GENARP (SE)
(74) Representative: AWA Sweden AB

(57) **Abstract**

A device (10) and a method (30) for training a machine learning model to analyze a sample is provided. The method (30) comprising: receiving (S300) a ground truth comprising a classification of at least one portion of a sample; acquiring (S302) a training set of digital images of the sample by illuminating the sample from a plurality of directions and capturing a digital image for each of the plurality of directions; and training (S304) the machine learning model to analyze the sample using the training set of digital images and the received ground truth. Further, a microscope system (20) and a method (40) for analyzing a sample is provided.

## Description

### Field of invention

The invention relates to a method, device, and system for analyzing a sample.

### Technical Background

In the field of digital microscopy, a typical task is to find and identify objects within a sample. For instance, within hematology and cytology, specific cell types may be found and identified in order to establish a diagnose for the patient from which the sample is taken.

It is typically beneficial to quickly screen samples for specific types of cells. During such screenings, there is typically a compromise between speed and precision. High precision of the screening typically requires a large magnification of the sample, which allows the cell type to be determined. However, this, in turn, means that only a small portion of the sample is imaged at a time. In order to screen the entire sample when high magnification is used, a large number of individual positions of the samples must be imaged, leading to a time-consuming screening process. Thus, in order to reduce the time needed for screening, the number of imaged positions could be reduced. However, in case the entire sample is to be screened, this requires that the magnification is reduced. This, on the other hand, can reduce the precision in the screening, leading to a screening process that may not properly find and identify cell types.

Hence, there is a need for improvements within the art.

### Summary of invention

In view of the above, it is an object of the present inventive concept to overcome or, at least partly, mitigate the problems discussed above. In particular, it is an object of the inventive concept to provide an improved and more efficient way to analyze samples with a digital microscope and to classify samples with high speed, high performance, and/or high accuracy. It is an object to provide a method which is requires less computational power to classify samples.

According to a first aspect, a method for training a machine learning model to analyze a sample is provided. The method comprising: receiving a ground truth comprising a classification of at least one portion of a sample; acquiring a training set of digital images of the sample by illuminating the sample from a plurality of directions and capturing a digital image for each of the plurality of directions; and training the machine learning model to analyze the sample using the training set of digital images and the received ground truth.

Within the context of this disclosure, the wording "ground truth" should be construed as information that is known to be real and/or true. Hence, in this context, since the machine learning model is trained to classify the sample, the ground truth may represent a true classification of the sample. The true classification may, e.g., be made by a human being manually classifying the sample, and/or by a device configured to classify the sample using conventional techniques (e.g. object recognition of digital images etc.).

Within the context of this disclosure, the wording "a portion of a sample" should be construed as a region of the sample. The portion of the sample may be a single object in the sample (e.g. a cell), an area of the size of several objects in the sample, the full sample, or an area of any size in between. Hence, a classification of a portion of a sample may be understood as a classification of an object and/or a region in the sample.

Hence, the machine learning model may be trained to correlate the training set of digital images to the ground truth. The machine learning model may be trained iteratively and/or recursively until a difference between a classification output of the machine learning model and the ground truth is smaller than a predetermined threshold. A smaller difference between the classification output and the ground truth may indicate a higher accuracy of the classification provided by the machine learning model. The machine learning model may be trained using a plurality of samples. In such case, the machine learning model may be trained using a training set of digital images of each sample of the plurality of samples, and a corresponding ground truth associated with each sample of the plurality of samples. Using a plurality of samples during training the machine learning model may enhance the classification provided by using the trained machine learning model.

By illuminating the sample from a plurality of different directions and capturing a digital image for each of the plurality of directions, information regarding finer details of the sample may be captured than what normally is resolvable by a conventional microscope (i.e. using a conventional microscope illumination) used to image the sample. This can be understood as different portions of Fourier space (i.e. the spatial frequency domain) associated with the sample are imaged for different illumination directions. This technique may be known in the art as Fourier Ptychography. Further, by illuminating the sample from a plurality of different directions and capturing a digital image for each of the plurality of directions, information regarding a refractive index associated with the sample may be captured. This can be understood as an effect of refraction of light being dependent on an angle of incident for light illuminating the sample and the refractive index of the sample. Information regarding the refractive index of the sample may, in turn, allow phase information (typically referred to as quantitative phase within the art) associated with the sample to be determined. Since the plurality of digital images comprises information associated with one or more of fine details of the sample, a refractive index associated with the sample, and phase information associated with the sample, this information may be used in the training of the machine learning model, which may, in turn, allow for a machine learning model being trained to more accurately classify the sample than what would be allowed in case the plurality of digital images were captured from only one direction. Put differently, illuminating the sample from a plurality of different directions may allow for capturing information relating to details of the sample which are finer than what normally is allowed by a microscope objective used to image the sample. Thus, a microscope objective having a relatively lower magnification may be used while still being able to capture information related to fine details of the sample. Using a relatively lower magnification microscope objective may, in turn, allow for larger portions of the sample to be imaged at each imaging position. Hence, the entire sample may be scanned by imaging at relatively fewer positions which, in turn, may allow for a faster scanning of the sample.

Hence, by means of the present inventive concept, the sample may be quickly classified directly from the plurality of digital images, without a highly detailed image (i.e. an image having a relatively higher magnification than the plurality of digital images) of the sample. A further advantage is that the sample may be classified by the trained machine learning model instead of a human being, which may allow for a quicker and/or more reliable classification of the sample.

The sample may be an unstained sample. This may be avoided since information associated with a refractive index of the sample and/or phase information associated with the sample may be captured by illuminating the sample from a plurality of directions. This information (or variations therefore in the sample) may be used when the machine learning model is trained, whereby the trained machine learning model may be used to classify unstained samples.

An associated advantage is that unstained samples may be classified using the trained machine learning model. Thereby, associated staining processes may be avoided. This, in turn, may remove the use of toxic or hazardous chemicals. Further, it may reduce economical costs associated with classification of samples, and/or reduce a time needed to classify samples.

The machine learning model may be a convolutional neural network.

An associated advantage is that a convolutional neural network may detect important features relating to the sample in the plurality of digital images without any human supervision. This may be an effect of the plurality of digital images may comprise information, such as heights and/or positions, related to objects present in the sample.

A further associated advantage is that a convolutional neural network may allow for an enhanced accuracy in image recognition compared to other neural networks, which, in turn, may allow for an improved classification of the sample.

The ground truth may further comprise a position of the at least one portion in the sample; and the step of training the machine learning model may further comprise: training the machine learning model using the training set of digital images and the received ground truth until a difference between a position output of the machine learning model is smaller than an additional predetermined threshold, thereby training the machine learning model to determine a position of the at least one portion in the sample.

The at least one portion in the sample may comprise an object of interest (e.g., a cell), and the position of the at least one portion may thereby be a position of the object of interest. The position of the at least one portion may be a relative position within the sample.

An associated advantage is that the position of an interesting portion of the sample (e.g., a portion being assigned to a specific class) may be determined when analyzing a sample using the trained machine learning model.

The ground truth may further comprise dimensions of the at least one portion in the sample; and the step of training the machine learning model may further comprise: training the machine learning model using the training set of digital images and the received ground truth until a difference between a dimensions output of the machine learning model is smaller than a predetermined dimensions threshold, thereby training the machine learning model to determine dimensions of the at least one portion in the sample.

An associated advantage is that dimensions (e.g., shape and/or size) of an interesting portion of the sample (e.g., a portion being assigned to a specific class) may be determined when analyzing a sample using the trained machine learning model.

The ground truth may comprise a respective classification of a plurality of portions of the sample.

An associated advantage is that the machine learning model may be trained to classify different portions of a single sample into different classes, which may further enhance an analysis of the sample using the trained machine learning model.

The ground truth may further comprise a respective position of the plurality of portions in the sample.

An associated advantage is that the machine learning model may be trained to output positions of interesting portions (e.g. portions being classified into one or more specific classes) of the sample, which may further enhance an analysis of the sample using the trained machine learning model.

The training set of digital images may be acquired using a microscope objective and an image sensor, and wherein at least one direction of the plurality of directions may correspond to an angle larger than a numerical aperture of the microscope objective.

The numerical aperture of the microscope objective may be a dimensionless number associated with a range of angles over which the microscope objective accepts light. Hence, a direction larger than the numerical aperture may be understood as a direction corresponding to an angle larger than the range of angles over which the microscope objective is configured for brightfield microscopy.

By illuminating the sample from an angle larger than the numerical aperture of a microscope objective, the image captured for that angle of illumination may comprise information about higher spatial frequencies, and thereby finer details of the sample than the microscope objective normally allows. This may, in turn, allow for the microscope objective to capture phase information associated with the sample and information relating to details not normally being resolvable by the microscope objective, which may be used in the training of the machine learning model. Put differently, the by illuminating the sample from an angle larger than the numerical aperture of the microscope objective may allow for an improved training of the machine learning model.

According to a second aspect, a method for analyzing a sample is provided. The method comprising: receiving an input set of digital images of the sample, wherein the input set of digital images is acquired by illuminating the sample from a plurality of directions and capturing a digital image for each of the plurality of directions; analyzing the sample by: inputting the input set of digital images into a machine learning model being trained according to the method of the first aspect, and receiving, from the machine learning model, an output comprising a classification of at least one portion of the sample.

By inputting the received input set of digital images of the sample into a machine learning model, trained according to the method of the first aspect, the process of classifying the portion of the sample may be more efficient, since the classification of the sample is output directly from the trained machine learning model. Compared to classification techniques carried out on images captured with high magnification, a machine learning model trained according to the method of the first aspect may allow digital images capture at a relatively lower magnification to be used, while a high precision classification of the portion of the sample may be provided with a higher degree of efficiency (e.g. by requiring less computational resources and/or memory).

The sample may be an unstained sample. In case the sample is an unstained sample, the input set of digital images may comprise digital images of the unstained sample. In such case, the machine learning model may be trained using a training set of digital images comprising digital images of an unstained sample.

The output may further comprise a position of the at least one portion in the sample.

The output may further comprise dimensions of the at least one portion in the sample.

The input set of digital images of the sample may be acquired using a microscope objective and an image sensor, and wherein at least one direction of the plurality of directions may correspond to an angle larger than a numerical aperture of the microscope objective.

The above-mentioned features of the first aspect, when applicable, apply to this second aspect as well. In order to avoid undue repetition, reference is made to the above.

According to a third aspect, a device for training a machine learning model is provided. The device comprising circuitry configured to execute: a first receiving function configured to receive a training set of digital images, wherein the training set of digital images is acquired by illuminating a sample from a plurality of directions and capturing a digital image of at least one portion of the sample for each of the plurality of directions; a second receiving function configured to receive a ground truth; and a training function configured to train a machine learning model according to the method of the first aspect using the received ground truth and the acquired training set of digital images.

The circuitry of the device of the third aspect may be further configured to execute: a third receiving function configured to receive a high-resolution digital image of the sample; and a determination function configured to: classify at least one portion of the sample by classifying a corresponding portion of the high-resolution digital image of the sample, and form the ground truth comprising the classification of the at least one portion of the sample; and wherein the second receiving function may be configured to receive the formed ground truth from the determination function.

In this context, "high-resolution digital image of the sample" should be construed as a digital image of the sample having a relatively higher resolution than each digital image of the plurality of digital images. Further, the high-resolution digital image of the sample may be a digital image of the sample captured with a microscope objective having a relatively higher magnification than a microscope objective used to capture each digital image of the training set of digital images. Hence, details which are visible in the high-resolution image may not be visible in a digital image captured with the microscope objective used to capture the training set of digital images.

An associated advantage is that the device may determine the ground truth by classifying the portion of the sample using a digital image of the sample which has a relatively higher resolution than each digital image of the plurality of digital images. Hence, an accurate ground truth (i.e. classification of the portion of the sample) may be allowed.

A further associated advantage is that the device itself may determine the ground truth, thereby removing, or at least reducing, a need for input from a human being (e.g. a classification of the portion of the sample performed by the human being).

The training function may be configured to train the machine learning model using a first subset of the training set of digital images and wherein the circuitry may be further configured to execute: a reconstructing function configured to reconstruct a high-resolution digital image of the sample from a second subset of the training set of digital images, the high-resolution image having a resolution higher than a resolution of the digital images of the training set; and wherein the third receiving function may be configured to receive the high-resolution digital image of the sample from the reconstruction function.

The high-resolution digital image of the sample may be reconstructed from the second subset using Fourier ptychography. The high-resolution digital image of the sample may be reconstructed by inputting the second subset into a further machine learning model being trained to reconstruct a high-resolution image of a sample from a plurality of digital images acquired by illuminating the sample from a plurality of directions and capturing a digital image for each of the plurality of directions.

An associated advantage is that, since the same microscope system may be used to capture the digital images used as input for the training (i.e. the first subset of the training set of digital images) and the digital images used to determine the ground truth (i.e. the high-resolution digital image reconstructed from the second subset of the training set of the digital images), an improved training of the machine learning model may be allowed. Put differently, since the same system is used to capture digital images of the sample, the sample may remain stationary, thereby allowing each digital image of the training set of digital images to be a digital image of the same portion of the sample. This in turn may allow for an improved training of the machine learning model.

A further associated advantage is that the training of the machine learning model may need less time, since all digital images needed for the training may be acquired in a common imaging process.

The determination function may be further configured to: determine a position of the at least one portion of the sample by determining a position of a corresponding portion in the high-resolution digital image of the sample; and wherein the ground truth may further comprise the determined position of the at least one portion in the sample.

The above-mentioned features of the first aspect and/or the second aspect, when applicable, apply to this third aspect as well. In order to avoid undue repetition, reference is made to the above.

According to a fourth aspect, a microscope system is provided. The microscope system comprising: an illumination system configured to illuminate a sample from a plurality of directions; an image sensor; at least one microscope objective arranged to image the sample onto the image sensor; and circuitry configured to execute: an illumination function configured to control the illumination system to sequentially illuminate the sample from the plurality of directions, a capture function configured to control the image sensor to acquire an input set of digital images, wherein the input set of digital images is acquired by illuminating the sample from a plurality of directions and capturing a digital image for each of the plurality of directions, and an analysis function configured to analyze the sample by being configured to: input the input set of digital images into a machine learning model being trained according to the method of the first aspect, and receive, from the machine learning model, an output comprising a classification of at least one portion of the sample into at least one class.

The sample may be an unstained sample.

The illumination system may comprise a plurality of light sources arranged on a curved surface being concave along at least one direction along the surface, and wherein each light source of the plurality of light sources may be configured to illuminate the sample from one of the plurality of directions.

Arranging the plurality of light sources on a curved surface may be advantageous in that the distance from each light source to a current imaging position (i.e., a position or portion of the unstained sample currently being imaged) of the microscope system may be similar. Since this distance is similar, an intensity of light emitted from each light source may be similar at the current imaging position. This may be understood as an effect of the inverse square law. Thus, the unstained sample may be illuminated by light having similar intensities for each direction in the plurality of directions, which may, in turn, allow for a more homogenous illumination of the unstained sample independent of illumination direction. It may be advantageous to configure the illumination system such that the distance from each light source to the current imaging position is large enough such that each light source may be treated as a point source. This may allow the light to be quasi-coherent at the current imaging position. Hence, the distance from each light source to the current imaging position may be chosen such that an intensity of light from each light source at the current imaging position is high enough to produce the input set of digital images.

The curved surface may be formed of facets. Put differently, the curved surface may be constructed by a plurality of flat surfaces.

An associated advantage is that the illumination system may be easier to manufacture, thereby reducing associated economic costs.

A further associated advantage is that the illumination system may be modular. It may thereby be easier to replace one or more light sources (e.g., in case they break and/or are defective). For example, one or more light sources present on facet may be removed (e.g., by removing said facet) and replaced without having to replace light sources present on other facets.

The above-mentioned features of the first aspect, the second aspect, and/or the third aspect, when applicable, apply to this fourth aspect as well. In order to avoid undue repetition, reference is made to the above.

According to a fifth aspect, a non-transitory computer-readable storage medium is provided. The non-transitory computer-readable storage medium comprising program code portions which, when executed on a device having processing capabilities, performs the method according to the first aspect.

The above-mentioned features of the first aspect, the second aspect, the third aspect, and/or the fourth aspect, when applicable, apply to this fifth aspect as well. In order to avoid undue repetition, reference is made to the above.

### Brief description of the drawings

The above and other aspects of the present inventive concept will now be described in more detail, with reference to appended drawings. The figures should not be considered as limiting the inventive concept to the specific variant; instead they are used for explaining and understanding the inventive concept. As illustrated in the figures, relative distances between different elements, the sizes of layers and regions are exaggerated for illustrative purposes and, thus, are provided to illustrate the general structures of variants of the present inventive concept. Like reference numerals refer to like elements throughout.
Figure 1 illustrates a device for training a machine learning model.
Figure 2 illustrates a microscope system.
Figure 3 is a box scheme of a method for training a machine learning model to analyze a sample.
Figure 4 is a box scheme of a method for analyzing a sample using a trained machine learning model.
Figure 5 illustrates an illumination system having a curved surface formed of facets.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

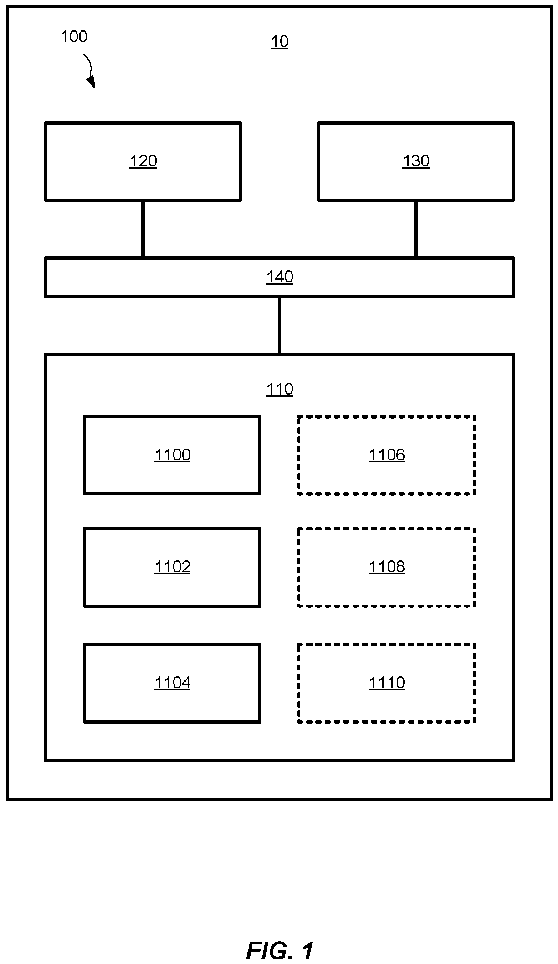

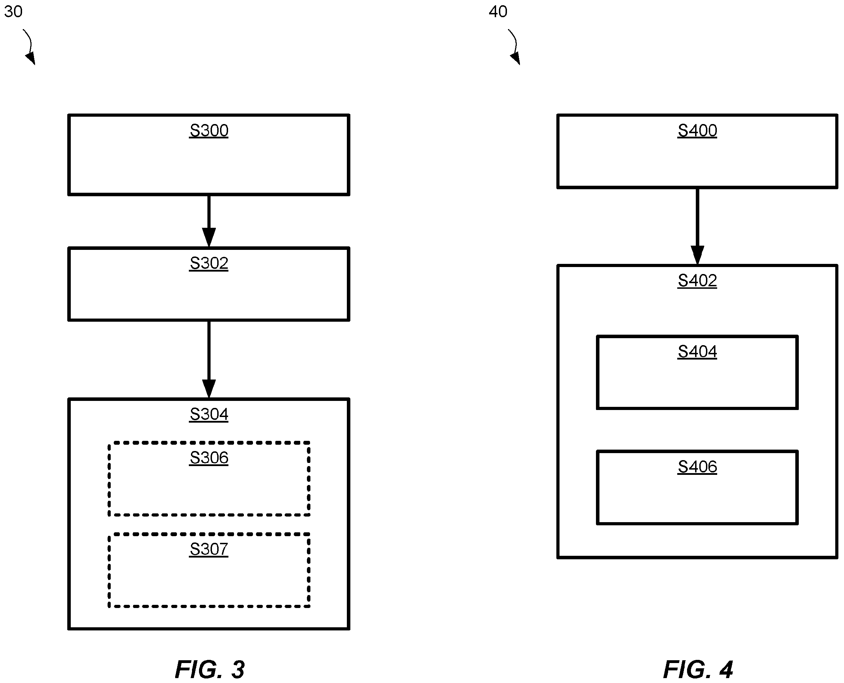

A method 30 and a device 10 for training a machine learning model to analyze a sample will now be described with reference to Fig. 1 and Fig. 3. Figure 1 illustrates a device 10 for training a machine learning model to analyze a sample. The device 10 may be a computing device. Examples of suitable computing devices comprise computers, servers, smartphones, tablets, etc. The device 10 may further be implemented as part of a cloud server and/or a distributed computing arrangement. It is further to be understood that the device 10 may comprise further components, e.g. input devices (mouse, keyboard, touchscreen, etc.) and/or a display. The device 10 may further comprise a power source, e.g. a connection to electrical power, a battery, etc. The device 10 comprises circuitry 100. As is illustrated in the example of Fig. 1, the circuitry 100 may comprise one or more of a memory 110, a processing unit 120, a transceiver 130, and a data bus 140. The memory 110, the processing unit 120, and the transceiver 130 may communicate via the data bus 140. The processing unit 120 may be a central processing unit (CPU). The transceiver 130 may be configured to communicate with external devices. For example, the transceiver 130 may be configured to communicate with servers, computer external peripherals (e.g. external storage), etc. The external devices may be local devices or remote devices (e.g. a cloud server). The transceiver 130 may be configured to communicate with the external devices via an external network (e.g. a local-area network, the internet, etc.) The transceiver 130 may be configured for wireless and/or wired communication. Suitable technologies for wireless communication are known to the skilled person. Some non-limiting examples comprise Wi-Fi and Near-Field Communication (NFC). Suitable technologies for wired communication are known to the skilled person. Some non-limiting examples comprise USB, Ethernet, and Firewire.

The memory 110 may be a non-transitory computer-readable storage medium. As is illustrated in the example of Fig. 1, the memory 110 may store program code portions corresponding to one or more functions 1100, 1102, 1104, 1106, 1108, 1110. The program code portions may be executable by the processing unit, which thereby performs the functions. Hence, when it is referred to that the circuitry 100 is configured to execute a specific function, the processing unit 120 may execute program code portions corresponding to the specific function which may be stored on the memory 110. However, it is to be understood that one or more functions of the circuitry 100 may be hardware implemented and/or implemented in a specific integrated circuit. For example, one or more functions may be implemented using field-programmable gate arrays (FPGAs). Put differently, one or more functions of the circuitry 100 may be implemented in hardware or software, or as a combination of the two.

The circuitry 100 is configured to execute a first receiving function 1100, a second receiving function 1102, and a training function 1104. The circuitry 100 may be further configured to execute one or more of a third receiving function 1106, a determination function 1108, and a reconstructing function 1110.

The first receiving function 1100 is configured to receive a training set of digital images. The training set of digital images is acquired S302 by illuminating a sample from a plurality of directions and capturing a digital image of at least one portion of the sample for each of the plurality of directions. The sample may be an unstained sample. Hence, the training set of digital images may comprise digital images of the unstained sample. The first receiving function 1100 may be configured to receive the training set of digital images via the transceiver 130. For example, the training set of digital images may be captured using an external microscope system and then transmitted to the transceiver 130 of the device 10. As a further example, the device 10 may form part of a microscope system and the training set of digital images may be received from an image sensor of the microscope system. The memory 110 may be configured to store the training set of digital images, and the first receiving function 110 may be configured to receive the training set of digital images from the memory 110. The training set of digital images may be captured using a microscope objective and an image sensor. The sample may be sequentially illuminated from at least one direction of the plurality of directions. Each digital image of the training set of digital images may be captured when the sample is illuminated from at least one direction of the plurality of directions. Thus, the sample may be illuminated from a single direction of the plurality of direction or from several directions of the plurality of directions at the same time.

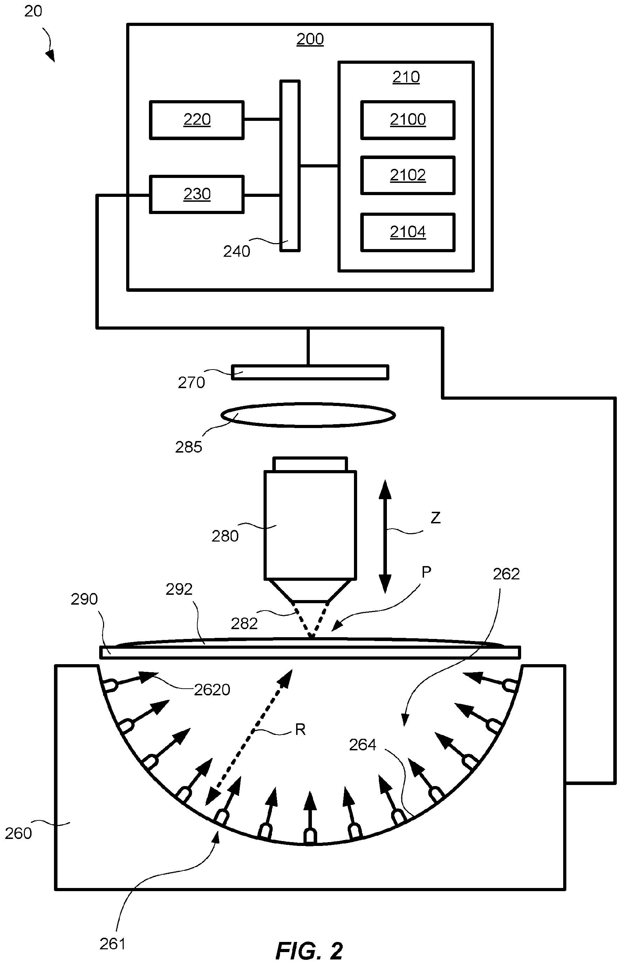

At least one direction of the plurality of directions may correspond to an angle larger than a numerical aperture of the microscope objective. Since the sample from a plurality of different directions and capturing a digital image for each of the plurality of directions, information regarding finer details of the sample may be captured than what normally is resolvable by the microscope objective used to image the sample. This can be understood as different portions of Fourier space (i.e. the spatial frequency domain) associated with the sample are imaged for different illumination directions. This technique may be known in the art as Fourier ptychography. Generally in Fourier ptychography, high spatial frequencies in Fourier space associated with the sample are sampled when the sample is illuminated from a direction corresponding to a large angle of incidence. Hence, in case the sample is illuminated from a direction corresponding to an angle larger than the numerical aperture of the microscope objective, even higher spatial frequencies of the Fourier space may be sampled. This is possible since the light is scattered by the sample, and a portion of the light scattered by the sample may be collected by the microscope objective. Since the plurality of digital images comprises information associated with fine details of the sample, this information may be used in the training of the machine learning model, which may, in turn, allow for a machine learning model being trained to classify the sample more accurately than what would be allowed in case the plurality of digital images were captured from only one direction or using a conventional microscope. Put differently, illuminating the sample from one of a plurality of different directions at a time may allow for capturing information relating to details of the sample which are finer than what normally is allowed by the microscope objective. It is to be understood that the information relating to finer details of the sample and phase information associated with the sample may be captured by illuminating the sample from more than one of the plurality of different directions at a time, e.g. a subset of the plurality of directions. The subset of the plurality of directions may comprise directions corresponding to different portions of the Fourier space of the sample. The different portions of the Fourier space of the sample may be partially overlapping or non-overlapping. Thus, a microscope objective having a relatively lower magnification may be used while still being able to capture information related to fine details of the sample. For example, by illuminating the sample from the plurality of directions, a microscope objective having a numerical aperture of 0.4 may capture information relating to fine details to the same extent that a microscope objective being used in conventional microscopy and having a numerical aperture of 1.25. Put differently, by illuminating the sample from the plurality of directions, a microscope objective having a magnification of 20 times may capture information relating to fine details to the same extent that a microscope objective being used in conventional microscopy and having a magnification of 100 times. It is to be understood that the above magnifications and numerical apertures are examples only, and the present invention may be implemented for other magnifications and/or numerical apertures as well. A suitable microscope system comprising a microscope objective and an image sensor will be described in connection with Fig. 2.

The second receiving function 1102 is configured to receive S300 a ground truth. Here, "ground truth" is information that is known to be real and/or true. In this context, since the machine learning model is trained to classify the sample, the ground truth may represent a true classification of at least a portion of the sample. The true classification may, e.g., be made by a human being manually classifying the sample, and/or by a device configured to classify the sample using conventional techniques (e.g. object recognition of digital images etc.). Hence, the ground truth (i.e. the true classification of the sample) may be received by manual input. The manual input may be performed via input devices (not illustrated in Fig. 1), e.g. keyboard, mouse, etc., coupled to the device 10. The ground truth may be received via the transceiver 130. For example, the classification may be made on a different device and/or stored on a different device, and transmitted to the device 10 via the transceiver 130. In case the sample is an unstained sample, the ground truth may comprise a classification of the unstained sample. Alternatively, the ground truth may comprise a classification of a stained sample. Put differently, the training set of digital images may comprise digital images of the unstained sample. After the training set of digital images of the unstained sample have been captured, the unstained sample may be stained. The ground truth may thereby comprise a classification of the stained sample. Hence, the machine learning model may be trained using a training set of digital images of an unstained sample and a ground truth being a classification of a stained sample. The ground truth may comprise a position of at least one portion of the sample. The ground truth may comprise dimensions of the at least one portion of the sample. The dimensions of the at least one portion of the sample may be one or more of a height, a width, and a shape of the at least one portion of the sample. The ground truth may comprise a respective classification of a plurality of portions of the sample. Hence, the machine learning model may be trained to classify different portions of a single sample into different classes. The ground truth may further comprise a respective position of the plurality of portions in the sample. The ground truth may further comprise respective dimensions of the plurality of portions in the sample. The machine learning model may additionally be trained to output positions and/or dimensions of interesting portions (e.g. portions being classified into one or more specific classes) of the sample.

The third receiving function 1106 may be configured to receive a high-resolution digital image of the sample. The high-resolution digital image of the sample may be captured using a microscope objective having a relatively larger magnification than the microscope objective used to capture the training set of digital images. Put differently, since the microscope objective used to capture the high-resolution image may have a relatively larger magnification, the high-resolution image may be a digital image of a smaller area of the sample compared to an image captured using microscope objective used to capture the training set of digital images. For this reason, the high-resolution digital image of the sample may be formed from a plurality of high-resolution digital images of the sample. For example, by combining (e.g. by stitching) the plurality of high-resolution digital images. The combined image may thereby be an image of an area of the sample comparable to the digital images of the training set of digital images. The high-resolution digital image may be a digital image of the sample having a relatively higher resolution than each digital image of the training set of digital images. Further, the high-resolution digital image (or each of the plurality of high-resolution images) of the sample may be a digital image of the sample captured with a microscope objective having a relatively higher magnification than a microscope objective used to capture each digital image of the training set of digital images. Hence, details which are visible in the high-resolution image may not be visible in a digital image captured with the microscope objective used to capture the training set of digital images. In case the sample is an unstained sample, the high-resolution digital image of the sample may be a high-resolution digital image of the unstained sample. Alternatively, the high-resolution digital image of the sample may be a high-resolution digital image of a stained sample. Hence, the training set of digital images of an unstained sample may be captured, and after the training set has been captured, the unstained sample may be stained. After the sample has been stained, the high-resolution digital image of the stained sample may be captured. The reconstructing function 1110 may be configured to reconstruct the high-resolution digital image of the sample from a subset of the training set of digital images. In this case, the reconstructed high-resolution digital image may be a digital image of the unstained sample (in case the sample is unstained). The reconstruction function 1110 may be configured to reconstruct the high-resolution image of the sample from a set of digital images of a stained sample. In this case, the reconstructed high-resolution digital image may be a digital image of the stained sample. The high-resolution image may have a resolution higher than a resolution of the digital images of the training set. The high-resolution digital image of the sample may be reconstructed from the second subset using Fourier ptychography. The high-resolution digital image of the sample may be reconstructed by inputting the second subset into a further machine learning model being trained to reconstruct a high-resolution image of a sample from a plurality of digital images acquired by illuminating the sample from a plurality of directions and capturing a digital image for each of the plurality of directions. The third receiving function may be configured to receive the high-resolution digital image of the sample from the reconstruction function.

The determination function 1108 may be configured to classify at least one portion of the sample by classifying a corresponding portion of the high-resolution digital image of the sample. The determination function 1108 may be configured to classify a plurality of portions of the sample.

The determination function 1108 may be configured to classify the corresponding portion of the high-resolution digital image by using an automatic classification algorithm. The automatic classification algorithm may use image recognition to identify one or more objects in the sample. The determination function 1108 may be configured to compare the one or more identified objects with a database comprising entries correlating sample classifications and objects in the sample. For example, the determination function 1108 may be configured to identify cancerous cells in a blood sample, and the database may correlate cancerous cells with a suitable classification (e.g. "cancer", "infected", etc.). As an example, the classification of the sample may comprise determining whether or not objects of the sample pertains to a class so that the number of objects in the sample pertaining to the class may be counted. When screening for leukemia for instance, it may be an objective to count the number of white blood cells in a sample. As another example, the classification of the sample may comprise determining whether or not at least one object pertaining to a class is present in the sample. When screening for malaria for instance, a sample may be classified as infected or not infected depending on whether or not at least one red blood cell infected with a malaria parasite are present in the sample. Similarly, when screening for a precancerous cervical lesion that may develop into cervical cancer, a sample may be classified as healthy or not healthy depending on whether or not at least one abnormal cell is present in the sample. The determination function 1108 may be configured to receive manual input from a human being. The manual input may, e.g., be a classification of the sample and/or the detected objects. In such case, the device 10 may be configured to display a result of the object detection, and may prompt a human being to classify the objects using input device (e.g. a keyboard and mouse, and/or a touchscreen) in communication with the device 10.

The determination function 1108 may be further configured to determine a position of the at least one portion of the sample by determining a position of a corresponding portion in the high-resolution digital image of the sample. The determination function 1108 may, in case it is configured to classify a plurality of portions of the sample, be further configured to determine a respective position of the plurality of portions in the sample. The position may, e.g., be determined by object recognition. For example, the sample may be positioned on a surface comprising markings. The markings on the surface may provide information relating to a relative position on the surface. Hence, the marking may be identified using object recognition, and the relative position on the surface may be decoded from the marking. Such markings may further be used to determine relative positions in the high-resolution digital image in case the high-resolution digital image is a combination of a plurality of high-resolution digital images. The determination function 1108 may be configured to receive a current relative position of the sample from the microscope system used to capture the high-resolution digital image. The relative position of the sample which is imaged in the high-resolution digital image may be stored as metadata in the high-resolution digital image. Such information may further be used to determine relative positions in the high-resolution digital image in case the high-resolution digital image is a combination of a plurality of high-resolution digital images.

The determination function 1108 may be further configured to form the ground truth comprising the classification of the at least one portion of the sample. The ground truth may further comprise the determined position of the at least one portion in the sample. The second receiving function 1102 may be configured to receive the formed ground truth from the determination function 1108.

The training function 1104 is configured to train S304 a machine learning model to analyze the portion of the sample using the received ground truth and the acquired training set of digital images. The machine learning model may be a convolutional neural network. The machine learning model may be a convolutional neural network suitable for object detection and/or classification. The training function 1104 is configured to receive the ground truth comprising the classification of the at least one portion of a sample. The training function 1104 may receive the ground truth from the second receiving function 1102. The training function 1104 is further configured to acquire the training set of digital images of the sample. As explained previously, the training set of digital images is acquired by illuminating the sample from a plurality of directions and capturing a digital image for each of the plurality of directions. The training function 1104 is further configured to train the machine learning model to analyze the sample using the training set of digital images and the received ground truth.

The training function 1104 may be configured to train the machine learning model iteratively and/or recursively until a difference between a classification output of the machine learning model and the ground truth is smaller than a predetermined threshold. Hence, the training function 1104 may train the machine learning model to correlate the training set of digital images to the ground truth. A smaller difference between the classification output from the machine learning model and the ground truth may indicate a higher accuracy of the classification provided by the trained machine learning model. The training function 1104 may be configured to train the machine learning model until a loss function is smaller than a predetermined threshold. The loss function may be determined from a difference between a classification output of the machine learning model and the ground truth. The machine learning model may be trained until the loss function is minimized. A skilled person realizes that minimizing functions, e.g. the loss function, may be associated with tolerances. For example, the loss function may be regarded as being minimized even though the minimized loss function has a value which is not a local and/or global minimum.

As discussed previously, the ground truth may further comprise a position of the at least one portion in the sample. In such case, the training function 1104 may be further configured to train S306 the machine learning model using the training set of digital images and the received ground truth until a difference between a position output of the machine learning model is smaller than an additional predetermined threshold. The machine learning model may thereby be trained to determine a position of the at least one portion in the sample. This may allow for the trained machine learning model to localize objects within the sample.

As discussed previously, the ground truth may further comprise dimensions of the at least one portion in the sample. In such case, the training function 1104 may be further configured to train S307 the machine learning model using the training set of digital images and the received ground truth until a difference between a dimensions output of the machine learning model is smaller than a predetermined dimensions threshold. The machine learning model may thereby be trained to determine dimensions of the at least one portion in the sample. This may allow the trained machine learning model to determine a size and/or shape of objects within the sample.

In case a subset of the training set of digital images is used to reconstruct the high-resolution image, the training function 1104 may be configured to train the machine learning model using a further subset of the training set of digital images. Put differently, the training function 1104 may be configured to train the machine learning model using a first subset of the training set of digital images and the reconstruction function 1110 may be configured to reconstruct the high-resolution digital image using a second subset of the training set of digital images. The first subset and the second subset may be partly overlapping subsets of the training set of digital images. The first subset and the second subset may be non-overlapping subsets of the training set of digital images.

A method 40 for analyzing a sample 292 and a microscope system 20 suitable for analyzing a sample 292 will now be described with reference to Fig. 2 and Fig. 4. Figure 2 illustrates a microscope system 20. The microscope system 20 of Fig. 2 is suitable to acquire sets of digital images of a sample to be analyzed by a machine learning model trained according to the above. Further, the microscope system of Fig. 2 may be suitable to acquire the training set of digital images used to train the machine learning model according to the above.

As is illustrated in Fig. 2. the microscope system 20 comprises an illumination system 260, an image sensor 270, at least one microscope objective 280, and circuitry 200. The system may further comprise a sample holder 290 as illustrated in the example of Fig. 2. The circuitry 200 may comprise one or more of a memory 210, a processing unit 220, a transceiver 230, and a data bus 240. The processing unit 220 may comprise a central processing unit (CPU) and/or a graphical processing unit (GPU). The processing unit 220 may comprise of a CPU and a GPU. The transceiver 230 may be configured to communicate with external devices. For example, the transceiver 230 may be configured to communicate with servers, computer external peripherals (e.g. external storage), etc. The external devices may be local devices or remote devices (e.g. a cloud server). The transceiver 230 may be configured to communicate with the external devices via an external network (e.g. a local-area network, the internet, etc.) The transceiver 230 may be configured for wireless and/or wired communication. Suitable technologies for wireless communication are known to the skilled person. Some non-limiting examples comprise Wi-Fi and Near-Field Communication (NFC). Suitable technologies for wired communication are known to the skilled person. Some non-limiting examples comprise USB, Ethernet, and Firewire. The memory 210, the processing unit 220, and the transceiver 230 may communicate via the data bus 240. The illumination system 260 and/or the image sensor 270 may be configured to communicate with the circuitry 200 via the transceiver 230 as illustrated in Fig. 2. Additionally, or alternatively, the illumination system 260 and/or the image sensor 270 may be configured to directly (e.g. via a wired connection) communicate with the data bus 240. The memory 210 may be a non-transitory computer-readable storage medium. As is illustrated in the example of Fig. 2, the memory 210 may store program code portions corresponding to one or more functions 2100, 2102, 2104. The program code portions may be executable by the processing unit 220, which thereby performs the functions. Hence, when it is referred to that the circuitry 200 is configured to execute a specific function, the processing unit 220 may execute program code portions corresponding to the specific function which may be stored on the memory 210. However, it is to be understood that one or more functions of the circuitry 200 may be hardware implemented and/or implemented in a specific integrated circuit. For example, one or more functions may be implemented using field-programmable gate arrays (FPGAs). Put differently, one or more functions of the circuitry 200 may be implemented in hardware or software, or as a combination of the two.

Even though the image sensor 270 is illustrated on its own in Fig. 2, it is to be understood that the image sensor 270 may be comprised in a camera. In the example of Fig. 2, the sample holder 290 is a microscope slide onto which a sample 292 has been applied. In the example of Fig. 2, the sample is an unstained sample. However, as discussed previously, the sample may be a stained sample. It is to be understood that the sample 292 may be covered by a coverslip (not illustrated in Fig. 2). The sample holder 290 may be configured to hold the sample 292 to be analyzed. The sample holder 290 may be movable (e.g. by being coupled to manual and/or motorized stages), thereby allowing the sample 292 to be moved such that different portions of the sample 292 may be imaged by the at least one microscope objective 280.

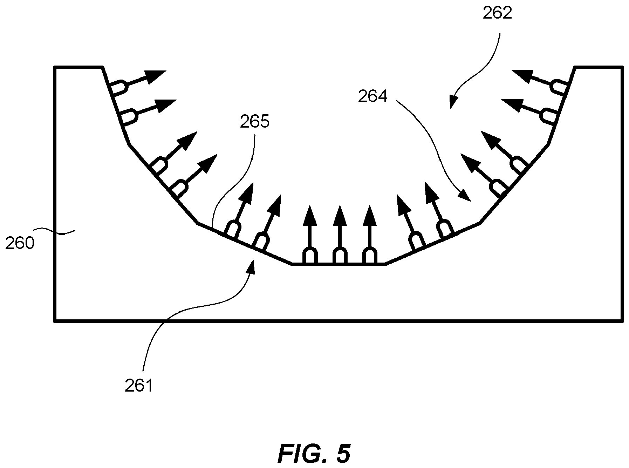

The illumination system 260 is configured to illuminate the sample 292 from a plurality of directions 262. As illustrated in the example of Fig. 2, the illumination system 260 may comprise a plurality of light sources 261. The light sources may be light-emitting diodes (LEDs). The light sources may be lasers. The light sources may emit incoherent light, quasi-coherent light, or coherent light. Each light source of the illumination system 260 may be arranged to illuminate the sample 292 from one of the plurality of directions 262. The illumination system 260 may be configured to simultaneously illuminate the sample 292 with one or more light sources of the plurality of light sources 261. Put differently, the illumination system 260 may be configured to simultaneously illuminate the sample 292 from one or more directions of the plurality of directions 262. As illustrated in the example of Fig. 2, the plurality of light sources 261 of the illumination system 260 may be arranged on a curved surface 264. As illustrated in the example of Fig. 2, the curved surface 264 may be concave along at least one direction along the surface 264. For example, the curved surface 264 may be a cylindrical surface. The curved surface 264 may be concave along two perpendicular directions along the surface. For example, the curved surface 264 may have a shape similar to a segment of a sphere. A segment of a sphere may be a spherical cap or a spherical dome. Arranging the plurality of light sources on a curved surface may be advantageous in that the distance R from each light source to a current imaging position P of the microscope system 20 may be similar. Since this distance is similar, an intensity of light emitted from each light source may be similar at the current imaging position P. This may be understood as an effect of the inverse square law. Thus, the sample 292 may be illuminated by light having similar intensities for each direction in the plurality of directions 262, which may, in turn, allow for a more homogenous illumination of the sample 292 independent of illumination direction. The distance R from each light source to the current imaging position P may be in a range from 4 cm to 15 cm. It may be advantageous to configure the illumination system such that the distance R from each light source to the current imaging position P is large enough such that each light source may be treated as a point source. This may allow the light to be quasi-coherent at the current imaging position P. Hence, the distance R from each light source to the current imaging position P may be larger than 15 cm, given that an intensity of light from each light source at the current imaging position is high enough to produce the plurality of images. In particular, the distance R between each light source may be larger than 15 cm in case one or more of the plurality of light sources are lasers. However, it is to be understood that the plurality of light sources may be arranged on a flat surface or on a surface having an irregular shape. It is further to be understood that Fig. 2 illustrates a cross section of the microscope system 20, and in particular the illumination system 260. Hence, the curved surface of the illumination system 260 illustrated in Fig. 2 may be a cylindrical surface or a portion of a spherical surface (or of a quasi-spherical surface). The curved surface 264 of the illumination system 260 may be bowl shaped. The curved surface 264 may be formed of facets 265, which is illustrated in the example of Fig. 5. Put differently, the curved surface 264 may be formed of a plurality of flat surfaces. The curved surface 264 may be a portion of a quasi-spherical surface comprising a plurality of facets or segments. Hence, the curved surface 264 may be a portion of a surface of a polyhedron. An example of such polyhedron may be a truncated icosahedron. The plurality of light sources 261 may be arranged on the facets 265. Each light source may be arranged such that the light source is configured to emit light in a direction substantially parallel to a normal of the associated facet. It is to be understood, similar to the example illustrated in Fig. 2, that Fig. 5 illustrates a cross section of the illumination system 260. Hence, the curved surface 264 of the illumination system 260 illustrated in Fig. 5 may be a quasi-cylindrical surface or a portion of a quasi-spherical surface. The curved surface 264 of the illumination system 260 of Fig. 5 may have a shape similar to a bowl. Hence, the facets 265 of Fig. 5 are illustrated with lines, and it is to be understood that each facet 265 may be a flat surface having at least three sides. For instance, the curved surface 264 may be formed of facets having five sides and facets having six sides (e.g., similar to an inner surface of a football or soccer ball). Even though that the curved surface 264 in Fig. 5 is illustrated as a continuous surface, it is to be understood that each facet may be separate. Hence, the curved surface may be formed by a plurality of parts, and each facet may be formed by one or more parts. It is further to be understood that each part may include one or more facets. Further, such parts may be arranged in contact with neighboring parts or may be arranged at a distance from neighboring parts. A single part may include all facets. It is further to be understood that the number facets 265 of the illumination system 260 of Fig. 5 is an example only, and other numbers of facets 265 may be used to form the curved surface 264 of the illumination system 260. It is furthermore to be understood that the number of light sources on each facet 265 is an example only, and that number may vary.

The at least one microscope objective 280 is arranged to image the sample 292 onto the image sensor 270. The at least one microscope objective 280 may comprise a first microscope objective having a magnification of 20 times and/or a numerical aperture of 0.4. The first microscope objective may be used to acquire the training set of digital images. The at least one microscope 280 may comprise a second microscope objective having a magnification of 100 times and/or a numerical aperture of 1.25. The second microscope objective may be used to acquire the high-resolution image of the sample, and a portion of the high-resolution image of the sample may be classified and used to form the ground truth. The numerical aperture and magnification of the first microscope objective and/or the second microscope objective are examples only and may be chosen depending on, e.g., a type of the sample. For example, the numerical aperture of the first microscope objective may have a magnification of 10 times and/or a numerical aperture of 0.25. It is to be understood that the microscope system 20 may comprise further optics which may be used together with the at least one microscope objective 280 to image the sample 292 onto the image sensor 270. For example, the microscope system may, as illustrated in the example of Fig. 2, comprise at least one relay lens 285 arranged such that the sample 292 may be imaged onto the image sensor 270 by the at least one microscope objective 280 and the at least one relay lens 285. It is further to be understood that the at least one relay lens 285 may be chosen (e.g. focal length, material, size, etc.) depending on the magnification and/or the numerical aperture of the at least one microscope objective 280. The at least one microscope objective 280 may be movable in a longitudinal direction Z by being coupled to a manual and/or motorized stage. The longitudinal direction Z may be parallel to an optical axis of the microscope system 20. Put differently, the at least one microscope objective 280 may be movable in a focusing direction of the microscope system 20. Alternatively, or additionally, the sample holder 290 may be movable along the longitudinal direction Z. The at least one microscope objective 280 and/or the sample holder 290 may be movable in a direction such that the sample 292 may be moved such that a focused image may be captured by the image sensor 270. The longitudinal direction Z of the at least one microscope objective 280 may be controlled by the circuitry 200. For example, the circuitry 200 may be configured to execute a focus function (not illustrated in Fig. 2) configured to adjust a position of the at least one microscope objective 280 along the longitudinal direction Z. The focus function may be configured to automatically adjust the position of the at least one microscope objective 280 along the longitudinal direction Z. Put differently, the focus function may be an autofocus function.

The circuitry 200 is configured to execute an illumination function 2100, a capture function 2102, and an analysis function 2104.

The illumination function 2100 is configured to control the illumination system 260 to sequentially illuminate the sample from the plurality of directions 262.

The capture function 2102 is configured to control the image sensor 270 to acquire an input set of digital images. Put differently, the capture function 2102 may be configured to receive S400 the input set of digital images. The input set of digital images is acquired by illuminating the sample 292 from a plurality of directions 262 and capturing a digital image for each of the plurality of directions 262. As discussed previously, at least one direction of the plurality of directions may correspond to an angle larger than a numerical aperture 282 of the microscope objective 280. For example, direction 2620 in Fig. 2 may correspond to an angle larger than the numerical aperture 282 of the microscope objective 280. Light entering the microscope objective 280 from the direction 2620 without being scattered may not be allowed to propagate through the microscope objective 280 (i.e. the angle of incidence of light from this direction may be outside the numerical aperture 282 of the microscope objective 280). Thus, light from this direction may need to be scattered by the sample 292 to be allowed to propagate through the microscope objective 280.

The analysis function 2104 is configured to analyze S402 the sample 292 by being configured to input S404 the input set of digital images into a machine learning model being trained in the manner described previously. Since the sample of the example in Fig. 2 is an unstained sample, the machine learning model is trained using a training set of digital images comprising digital images of an unstained sample. The analysis function 2104 is further configured to receive S406, from the machine learning model, an output comprising a classification of at least one portion of the sample 292 into at least one class. The output may further comprise a position of the at least one portion in the sample 292. The output may further comprise dimensions of the at least one portion in the sample 292. The at least one portion of the sample 292 may correspond to the portion of the sample 292 in the current imaging position P. The sample 292 may be moved such that several portions of the sample 292 is imaged in the same manner as described above. The at least one portion in the sample 292 may correspond to an object in the sample 292. Put differently, the at least one portion in the sample 292 may be smaller or larger than an area of the sample 292 in the current imaging position P.

Hence, the sample 292 may be classified directly from the input set of digital images, without needing a highly detailed digital image of the sample 292. Such highly detail digital image may, e.g., be a digital image captured using a microscope objective having a relatively higher magnification than the microscope objective 280 used to capture the input set of digital images, or a digital image reconstructed using Fourier ptychography. Thus, the sample 292 may be classified by the trained machine learning model instead of a human being, which may allow for a quicker and/or more reliable classification of the at least one portion of the sample 292. This may be further advantageous since reconstructing a high-resolution image using Fourier ptychography microscopy requires that a large number of digital images (typically hundreds) are combined into a reconstructed image by iteratively transforming the digital images to and from the spatial frequency domain, e.g. by Fourier transforms, in order to be correctly combined into a digital image having a higher resolution than the original digital images. Thus, the reconstruction process is very computationally intensive and requires a large amount of memory as the original images and the reconstructed high-resolution image have to be stored simultaneously. Thus, by avoiding such iterative reconstruction process, the sample 292 may be analyzed in less time and by using less computational resources. Further, since a digital image reconstructed using computational imaging (e.g. Fourier ptychography) is associated with a vertical level (i.e. along an optical axis of the microscope objective) of the sample 292, the present inventive concept may be better suited for samples comprising objects in different vertical levels (i.e. along an optical axis of the microscope system 20). This may be important for blood samples comprising blood cells for which it may be important to distinguish between objects inside the blood cells and objects on top of (or below) the blood cells. Since the machine learning model may be trained to directly classify such features of the sample 292, the trained machine learning model may directly classify a sample to comprise such features, whereas a method using reconstructed images need to reconstruct digital images at a plurality of different vertical levels in the sample and thereby requiring even more processing resources and memory.

A skilled person would be aware of machine learning, and in particular as to how a machine learning model may be trained and/or how a trained machine learning model may be used. However, in brief, the machine learning model may be a type of supervised machine learning model, e.g. a classification network such as Xception, VGG, ResNet, EfficientNet, or Inception. The machine learning model may be a transformer based network and/or an object detection network, such as Single Shot Detector, Yolo, Faster R-CNN, RetinaNet, or Spatial Pyramid Pooling. The machine learning model may be a convolutional neural network. The machine learning model may be trained to predict a desired output using example input training data and a ground truth, i.e. the "correct" or "true" output. Put differently, the ground truth may be used as a label for the input training data. The input training data may comprise data pertaining to different outcomes, and each input training data may thereby be associated with a ground truth associated with that particular input training data. Hence, each input training data may be labelled with an associated ground truth (i.e. "correct" or "true" output). The machine learning model may comprise a plurality of layers of neurons, and each neuron may represent a mathematical operation which is applied to the input training data. Typically, the machine learning model comprises an input layer, one or more hidden layers, and an output layer. The first layer may be referred to as the input layer. The output of each layer (except the output layer) in the machine learning model may be fed to a subsequent layer, which in turn produces a new output. The new output may be fed to a further subsequent layer. The output of the machine learning model may be an output of the output layer. The process may be repeated for all layers in the machine learning model. Typically, each layer further comprises an activation function. The activation function may further define the output of a neuron of the layer. For example, the activation function may ensure that the output from a layer is not too large or too small (e.g. tending towards positive or negative infinity). Further, the activation function may introduce non-linearity into the machine learning model. During the training process, weights and/or biases associated with the neurons of the layers may be adjusted until the machine learning model produces predictions for the input training data that reflect the ground truth. Each neuron may be configured to multiply the input to the neuron with a weight associated with that neuron. Each neuron may be further configured to add a bias associated with that neuron to the input. Put differently, an output from a neuron may be a sum of the bias associated with the neuron and a product of the weight associated with the neuron and the input. The weights and biases may be adjusted in a recursive process and/or an iterative process. This may be known as backpropagation within the art. A convolutional neural network may be a type of neural network comprising one or more layers that represents a convolution operation. In this context, the input training data comprises digital images. A digital image may be represented as matrix (or as an array), and each element in the matrix (or array) may represent a corresponding pixel of the digital image. The value of an element may thereby represent a pixel value of the corresponding pixel in the digital image. Hence, the input to the machine learning model may be a numerical input (e.g. a matrix or an array). The output of the machine learning model may be a numerical output. However, the numerical output of the machine learning model may be associated with a classification. For example, the machine learning model may output a number (e.g. an integer) and each number is associated with a class. The output of the machine learning model may be a vector (or an array) comprising floating point numbers. Each floating point number of the vector/array may be associated with a probability that the input belongs to a class associated with the floating point number's position in the vector/array. Hence, the size (or length) of the output vector/array may correspond to the number of classes that the machine learning model may classify (or may be trained to classify) the input into. In case the output of the machine learning model is a vector/array, the input may be determined to belong the class (i.e. classified into the class) associated with the position in the vector/array having a highest probability. A skilled person realizes that the above description may apply to other properties as well. For example, the floating point numbers of the output vector/array may, alternatively or additionally, be associated with a position and/or dimensions (e.g., height, width, and shape) of a box comprising a portion of the sample pertaining to, e.g., an object of interest in the sample.

The person skilled in the art realizes that the present inventive concept by no means is limited to the preferred variants described above. On the contrary, many modifications and variations are possible within the scope of the appended claims.

For example, the machine learning model has been described as being trained on only one sample, however it is to be understood that the machine learning model may be trained to analyze a plurality of samples. In such case, the machine learning model may be trained using a training set of digital images of each sample of the plurality of samples, and a corresponding ground truth associated with each sample of the plurality of samples.

It is further to be understood that digital images of the sample to be analyzed may be captured using a microscope system, and then analyzed on a separate device (e.g. a computer, server, cloud server, etc.). Hence, the digital images may be captured using the microscope system 20 of Fig. 2 without the analysis function 2104. The captured digital images may then be analyzed by a separate device comprising circuitry configured to execute the analysis function 2104. In such case the circuitry of the separate device may be configured to execute a receive function configured to receive S400 the input set of digital images. The receive function may be configured to receive the input set of digital images from a separate storage device (e.g. a server, a cloud server, an external memory device, etc.) and/or from the microscope system used to capture the digital images.

Additionally, variations to the disclosed variants can be understood and effected by the skilled person in practicing the claimed invention, from a study of the drawings, the disclosure, and the appended claims.

## Claims

1. A method (30) for training a machine learning model to analyze a sample, the method (30) comprising:
receiving (S300) a ground truth comprising a classification of at least one portion of a sample;
acquiring (S302) a training set of digital images of the sample by illuminating the sample from a plurality of directions and capturing a digital image for each of the plurality of directions; and
training (S304) the machine learning model to analyze the sample using the training set of digital images and the received ground truth.

2. The method (30) according to claim 1, wherein the sample is an unstained sample.

3. The method (30) according to claim 1 or 2, wherein the machine learning model is a convolutional neural network.

4. The method (30) according to any one of the preceding claims, wherein the ground truth further comprises a position of the at least one portion in the sample, and wherein the step of training (S304) the machine learning model further comprises:
training (S306) the machine learning model using the training set of digital images and the received ground truth until a difference between a position output of the machine learning model is smaller than an additional predetermined threshold, thereby training the machine learning model to determine a position of the at least one portion in the sample.

5. The method (30) according to any one of the preceding claims, wherein the ground truth further comprises dimensions of the at least one portion in the sample, and wherein the step of training (S304) the machine learning model further comprises: training (S307) the machine learning model using the training set of digital images and the received ground truth until a difference between a dimensions output of the machine learning model is smaller than a predetermined dimensions threshold, thereby training the machine learning model to determine dimensions of the at least one portion in the sample.

6. The method (30) according to any one of the preceding claims wherein the ground truth comprises a respective classification of a plurality of portions of the sample.

7. The method (30) according to claim 6, wherein the ground truth further comprises a respective position of the plurality of portions in the sample.

8. The method (30) according to any one of the preceding claims, wherein the training set of digital images is acquired using a microscope objective and an image sensor, and wherein at least one direction of the plurality of directions corresponds to an angle larger than a numerical aperture of the microscope objective.

9. A method (40) for analyzing a sample, the method (40) comprising:
receiving (S400) an input set of digital images of the sample, wherein the input set of digital images is acquired by illuminating the sample from a plurality of directions and capturing a digital image for each of the plurality of directions;
analyzing (S402) the sample by:
inputting (S404) the input set of digital images into a machine learning model being trained according to the method (30) any one of claims 1-8, and
receiving (S406), from the machine learning model, an output comprising a classification of at least one portion of the sample.

10. The method (40) according to claim 9, wherein the sample is an unstained sample.

11. The method (40) according to claim 9 or 10, wherein the output further comprises a position of the at least one portion in the sample.

12. The method (40) according to any one of claims 9-11, wherein the input set of digital images of the sample is acquired using a microscope objective and an image sensor, and wherein at least one direction of the plurality of directions corresponds to an angle larger than a numerical aperture of the microscope objective.

13. A device (10) for training a machine learning model comprising circuitry (100) configured to execute:
a first receiving function (1100) configured to receive a training set of digital images, wherein the training set of digital images is acquired by illuminating a sample from a plurality of directions and capturing a digital image of at least one portion of the sample for each of the plurality of directions;
a second receiving function (1102) configured to receive a ground truth; and
a training function (1104) configured to train a machine learning model according to the method (30) of any one of claims 1-8 using the received ground truth and the acquired training set of digital images.

14. The device (10) according to claim 13, wherein the circuitry (100) is further configured to execute:
a third receiving function (1106) configured to receive a high-resolution digital image of the sample; and
a determination function (1108) configured to:
classify at least one portion of the sample by classifying a corresponding portion of the high-resolution digital image of the sample, and
form the ground truth comprising the classification of the at least one portion of the sample; and
wherein the second receiving function (1102) is configured to receive the formed ground truth from the determination function (1108).

15. The device (10) according to claim 14, wherein the training function (1104) is configured to train the machine learning model using a first subset of the training set of digital images and wherein the circuitry (100) is further configured to execute:
a reconstructing function (1110) configured to reconstruct a high-resolution digital image of the sample from a second subset of the training set of digital images, the high-resolution image having a resolution higher than a resolution of the digital images of the training set; and
wherein the third receiving function (1106) is configured to receive the high-resolution digital image of the sample from the reconstruction function (1110).

16. The device (10) according to claim 14 or 15, wherein the determination function (1108) is further configured to:
determine a position of the at least one portion of the sample by determining a position of a corresponding portion in the high-resolution digital image of the sample; and
wherein the ground truth further comprises the determined position of the at least one portion in the sample.

17. A microscope system (20) comprising:
an illumination system (260) configured to illuminate a sample (292) from a plurality of directions (262);
an image sensor (270);
at least one microscope objective (280) arranged to image the sample (292) onto the image sensor (270); and
circuitry (200) configured to execute:
an illumination function (2100) configured to control the illumination system (260) to sequentially illuminate the sample (292) from the plurality of directions (262),
a capture function (2102) configured to control the image sensor (270) to acquire an input set of digital images, wherein the input set of digital images is acquired by illuminating the sample (292) from a plurality of directions (262) and capturing a digital image for each of the plurality of directions (262), and
an analysis function (2104) configured to analyze the sample (292) by being configured to:
input the input set of digital images into a machine learning model being trained according to the method (30) of any one of claims 1-8, and
receive, from the machine learning model, an output comprising a classification of at least one portion of the sample (292) into at least one class.

18. The microscope system (20) according to claim 17, wherein the illumination system (260) comprises a plurality of light sources (261) arranged on a curved surface (264) being concave along at least one direction along the surface (264), and wherein each light source of the plurality of light sources (261) is configured to illuminate the sample (292) from one of the plurality of directions (262).

19. The microscope system (20) according to claim 18, wherein the curved surface (264) is formed of facets (265).

20. A non-transitory computer-readable storage medium comprising program code portions which, when executed on a device having processing capabilities, performs the method (30) according to any one of claims 1-8 or the method (40) according to any one of claims 9-12.
